Europäisches Patentamt

European Patent Office

Office européen des brevets

(11) Numéro de publication: **0 234 993 B1**

(12) FASCICULE DE BREVET EUROPEEN

(45) Date de publication de fascicule du brevet:
**11.09.91**

(51) Int. Cl.5: **G01S 7/06**, G01S 15/02

(21) Numéro de dépôt: 87400157.1

(22) Date de dépôt: 23.01.87

(54) **Procédé et dispositif de reconnaissance automatique de cibles à partir d'échos "Doppler".**

(30) Priorité: 31.01.86 FR 8601378

(43) Date de publication de la demande:
02.09.87 Bulletin 87/36

(45) Mention de la délivrance du brevet:
11.09.91 Bulletin 91/37

(84) Etats contractants désignés:
**BE DE GB IT**

(56) Documents cités:
**DE-A- 3 002 148**
**FR-A- 2 192 737**
**GB-A- 2 054 310**

**IEEE TRANSACTIONS ON ACOUSTICS,
SPEECH AND SIGNAL PROCESSING, vol.
ASSP-23, no. 1, février 1975, pages 67-72,
IEEE, New York, US; F. ITAKURA: "Minimum
prediction residual prnciple applied to
speech recognition"**

**ICASSP 83, PROCEEDINGS OF THE IEEE IN-
TERNATIONAL CONFERENCE ON ACOUS-
TICS, SPEECH AND SIGNAL PROCESSING,
14-16 avril 1983, Boston, vol. 1, pages 93-96,
IEEE, New York, US; S. IMAI: "Cepstral analy-**

sis synthesis on the MEL frequency scale"

**ICASSP 82, PROCEEDINGS OF THE IEEE IN-
TERNATIONAL CONFERENCE ON ACOUS-
TICS, SPEECH AND SIGNAL PROCESSING,
3-5 mai 1982, Paris, vol. 3, pages 1952-1955,
IEEE, New York, US; G.J. BOSSCHA et al.:
"DFT-vocoder using harmonic-sieve pitch
extraction"**

(73) Titulaire: **THOMSON-CSF**
**51, Esplanade du Général de Gaulle**
**F-92800 Puteaux(FR)**

(72) Inventeur: **Potage, Jean**
**THOMSON-CSF SCPI 19, avenue de Messine**
**F-75008 Paris(FR)**
Inventeur: **Albrieux, Vincent**
**THOMSON-CSF SCPI 19, avenue de Messine**
**F-75008 Paris(FR)**

(74) Mandataire: **Lincot, Georges et al**
**THOMSON-CSF SCPI**
**F-92045 PARIS LA DEFENSE CEDEX 67(FR)**

## Description

La présente invention concerne un dispositif de reconnaissance automatique de cibles à partir d'échos "Doppler".

Dans les installations radar ou sonar cette reconnaissance est effectuée habituellement par un personnel spécialisé constitué d'opérateurs qui écoutent sur hauts-parleurs ou casques les sons "Doppler" fournis par les cibles pour déterminer leur nature, chaque opérateur procédant par comparaison avec des sons connus déjà répertoriés et identifiés.

Outre le fait que ce processus exige de chaque opérateur un apprentissage, sa crédibilité n'est pas absolue et dépend pour une part importante des facultés auditives des opérateurs en particulier lorsque les conditions d'écoute sont mauvaises et notamment lorsque le signal "Doppler" reçu se trouve noyé dans un bruit important.

Une autre méthode connue de la demande de brevet DEA 3002148, permet de substituer à la méthode de reconnaissance précédente une méthode de reconnaissance automatique procédant par analyse spectrale du signal au moyen d'une transformation de Fourier rapide. Cependant cette méthode présente l'inconvénient de donner des résultats qui dépendent fortement du bruit parasite affectant le signal analysé ainsi que des variations de niveau, sans possibilité de vérifier le caractère de vraisemblance des cibles détectées.

Le but de l'invention est de pallier les inconvénients précités.

A cet effet, l'invention a pour objet un dispositif pour la reconnaissance automatique de cibles en mouvement à des vitesses différentes à partir de signaux "Doppler" fournis par des installations radar ou sonar, comprenant un convertisseur analogique numérique pour convertir le signal Doppler en signaux numériques, et caractérisé en ce qu'il comprend :
- des moyens d'analyse spectrale pour calculer, pour chaque cible dans des intervalles de temps constant un nombre prédéterminé de spectres, chaque spectre étant représenté par un nombre prédéterminé de coefficients spectraux représentatifs de la transformation de Fourier inverse du logarithme de chaque spectre du signal représenté par les successions d'échantillons fournis par le convertisseur analogique numérique :
- des moyens de normalisation des coefficients spectraux fournis par les moyens d'analyse spectrale,
- des moyens de mémorisation des coefficients spectraux normalisés pendant une phase d'apprentissage lorsqu'ils correspondent à des cibles connues.

- un opérateur de comparaison pour comparer après la phase d'apprentissage les coefficients fournis par les moyens de normalisation avec les coefficients de chaque cible connue mémorisés dans les moyens de mémorisation et un moyen de décision pour identifier la cible lorsque les coefficients spectraux obtenus correspondent à ceux d'une cible mémorisée dans les moyens de mémorisation et lorsque la vitesse de la cible mesurée par l'installation sonar ou radar correspond à la nature de la cible identifiée par les coefficients spectraux des moyens de mémorisation.

Le dispositif selon l'invention a pour principal avantage d'être entièrement automatique, en ne nécessitant plus l'entraînement d'un personnel spécialisé pour la reconnaissance des cibles. Les moyens d'analyse spectraux utilisés leur confèrent également une grande immunité aux bruits et une très faible sensibilité aux variations de niveau du signal "Doppler" détecté.

D'autres caractéristiques et avantages de l'invention apparaîtront également à l'aide de la description qui va suivre, faite en regard des dessins annexés donnés uniquement à titre d'exemple qui représentent :
- la figure 1 un organigramme des différentes phases du procédé de reconnaissance de cibles selon l'invention ;
- la figure 2 un exemple de mise en oeuvre du procédé selon l'invention ;
- la figure 3 un premier exemple de normalisation linéaire pouvant être utilisé pour la comparaison des spectres ;
- la figure 4 un deuxième exemple de normalisation par programmation dynamique.

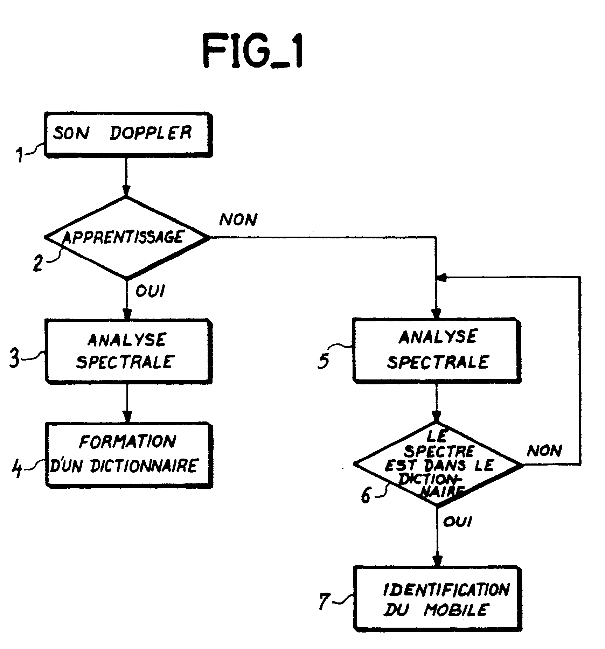

Le procédé mis en oeuvre par l'invention consiste à effectuer une analyse spectrale du signal "Doppler" fourni par une cible pour comparer les spectres obtenus à un nombre déterminé de spectres de sons "Doppler" caractéristiques de cibles connues enregistrées dans une mémoire dictionnaire. Ce procédé débute par la mise en oeuvre d'une phase d'apprentissage figurée aux étapes 3 et 4 de la figure 1.

Durant l'étape 3, les sons "Doppler" caractéristiques de cibles connues sont analysés et leurs spectres sont mémorisés pendant l'étape 4 dans une mémoire dictionnaire.

Lorsque la période d'apprentissage est terminée, le procédé devient opérationnel et chaque signal "Doppler" est analysé au cours des étapes 5, 6 et 7 représentées à la figure 1 qui consistent après avoir effectué à l'étape 5 l'analyse spectrale du signal inconnu, à comparer, à l'étape 6, les spectres obtenus aux spectres des sons "Doppler" connus répertoriés dans la mémoire dictionnaire. Si les spectres analysés sont reconnus comme faisant partie du dictionnaire, la cible correspondante est identifiée à l'étape 7.

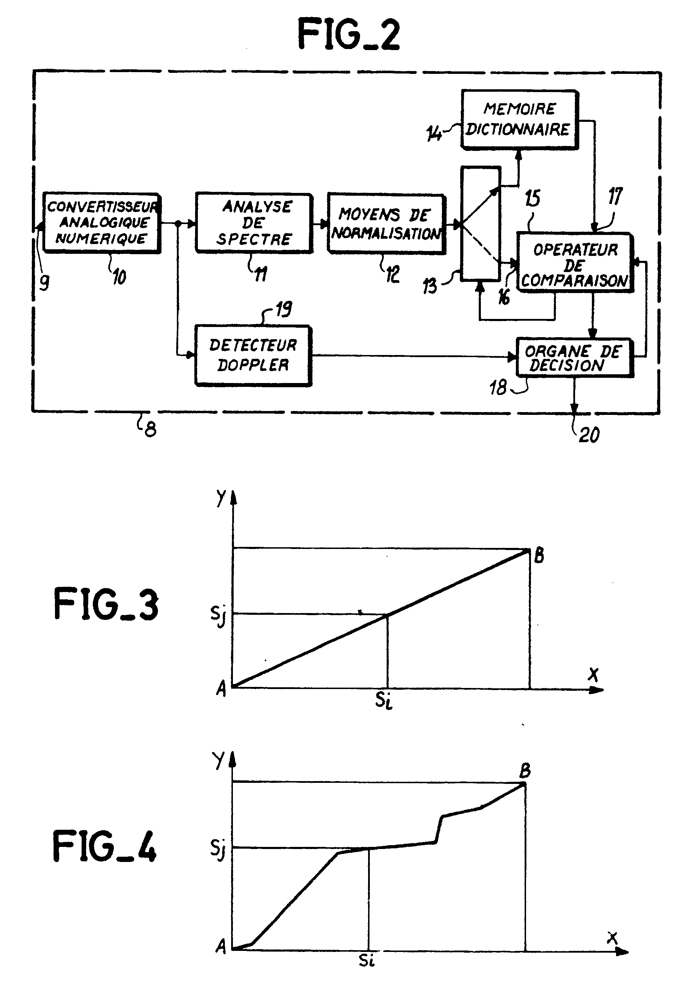

Un dispositif pour la mise en oeuvre de ce procédé est représenté à la figure 2 à l'intérieur d'une ligne en pointillés 8. Il comprend un convertisseur analogique-numérique 10, un analyseur de spectre 11, des moyens de normalisation 12, un multiplexeur 13, une mémoire dictionnaire 14, un opérateur de comparaison 15 à deux entrées 16 et 17, un organe de division 18 et un détecteur "Doppler" 19.

Le signal "Doppler" qui est éventuellement transposé dans la gamme audiofréquence est appliqué sur l'entrée 9 du convertisseur analogique-numérique 10. Ce signal est échantillonné à une fréquence double de la bande de fréquence utile et les échantillons numériques obtenus sont appliqués à l'entrée de l'analyseur du spectre 11. Ceux-ci sont formés, par exemple, par des mots binaires de 11 bits contenant éventuellement un bit de signe. Ces échantillons sont traités par l'analyseur de spectre 11 qui en effectue l'analyse cepstrale. Cette technique qui est largement employée en reconnaissance vocale consiste à calculer la transformée de Fourier inverse du logarithme du spectre du signal échantillonné appliqué à l'entrée de l'analyseur. Elle a pour avantage qu'elle permet d'obtenir des résultats qui dépendent peu du bruit parasite affectant le signal sonore analysé et de ses variations de niveau. Les signaux obtenus dans ces conditions à la sortie de l'analyseur 11 sont constitués de suites de vecteurs de représentation paramétrique des signaux formés d'un nombre déterminé de coefficients calculés pendant des intervalles de temps constants pour que tous les signaux puissent être décrits avec le même nombre de spectres. Ces coefficients sont ensuite groupés par paquets ou segments suivant également des techniques connues à l'aide des moyens de normalisation temporelle et fréquencielle 12.

Les signaux normalisés sont transmis à travers le multiplexeur 13, à destination de la mémoire dictionnaire 14 ou de l'opérateur de comparaison 15. En phase d'apprentissage, l'entrée de la mémoire dictionnaire 14 est connectée à la sortie des moyens de normalisation 12 pour permettre la mémorisation séquentielle des spectres des cibles connues. Cette mémorisation s'effectue de façon connue sous la commande d'un organe de commande, non représenté, formé par un microprocesseur ou tout dispositif équivalent.

A titre d'exemple, en donnant à la mémoire dictionnaire 14 une capacité de 1600 octets on peut enregistrer les spectres de 20 cibles, chaque cible étant représentée par un jeu de 10 spectres de 8 coefficients chacun.

Lorsque la phase d'apprentissage est terminée, le multiplexeur 13 relie directement la sortie des moyens de normalisation 12 à la première entrée 16 de l'opérateur de comparaison 15 dont la deuxième entrée 17 est reliée à la sortie de la mémoire dictionnaire 14.

L'opérateur de comparaison 15 effectue la comparaison des spectres du son inconnu aux spectres des cibles connues contenus dans la mémoire dictionnaire 14.

Au cours de cette comparaison différents procédés de normalisation temporelle peuvent être exécutés par les moyens de normalisation 12. En particulier, il est possible d'utiliser soit une normalisation linéaire à la manière de celle qui est représentée par le diagramme à la figure 3 ou encore une normalisation par programmation dynamique du type de celle qui est représentée par le diagramme de la figure 4.

Sur la figure 3, les index $S_i$ et $S_j$ des spectres des sons connus et inconnus sont portés respectivement sur deux axes orthonormés X et Y et la distance séparant le son porté en X du son porté en Y est mesurée en faisant la somme des distances séparant les index des spectres élémentaires $S_i$ et $S_j$.

Sur la figure 4 la comparaison ne s'effectue plus linéairement mais selon une courbe reliant les index externes des spectres correspondant aux points A et B.

Dans les deux cas la forme reconnue est celle dont la distance cumulée ou moyenne par rapport à la forme des spectres de la cible inconnue est la plus faible.

Lorsque les formes des spectres sont reconnues comme appartenant aux formes du dictionnaire l'opérateur de comparaison 15 transmet un signal de commande à l'organe de décision 18 qui est couplé à la sortie du convertisseur analogique-numérique 10 au travers du détecteur "Doppler" 19, pour vérifier la vraisemblance des formes reconnues avec la vitesse radiale de la cible détectée. La mesure de cette vitesse est réalisée par le détecteur "Doppler" 19 qui détecte la fréquence de la raie "Doppler" du spectre du son analysé qui est significative de la vitesse radiale de la cible. Le résultat de cette mesure est transmis à l'organe de décision 18 qui vérifie la cohérence entre la nature de la cible déduite des formes des spectres du son "Doppler" détecté et la vitesse radiale mesurée.

Lorsque la cohérence entre les formes des spectres reconnues et la vitesse radiale de la cible est constatée, l'organe de décision 18 émet sur une sortie 20 un signal indiquant la validité du processus de reconnaissance effectué par l'opérateur de comparaison 15.

Par contre, s'il n'y a pas adéquation entre les formes du spectre reconnues et la vitesse radiale détectée d'une cible, cette non cohérence est également signalée sur la sortie 20 de l'organe de décision par un autre signal. Eventuellement, dans ce cas, une autre analyse du caractère de vraisemblance peut être effectuée par l'organe de décision 18 qui peut, par exemple, proposer comme cible reconnue celle qui est arrivée en deuxième position dans le processus de reconnaissance.

L'exemple qui vient d'être donné d'une réalisation préférée de l'invention n'est pas limitatif. Il va de soi que d'autres modes de réalisation sont également possibles, qui tous pourront résulter de certains choix particuliers dans la structure des moyens précédemment décrits pour mettre en oeuvre l'invention.

Il pourra en être ainsi notamment du choix des moyens d'analyse spectrale mis en oeuvre pour effectuer la reconnaissance des spectres du signal "Doppler" qui pourront dans leur ensemble être choisis parmi les moyens similaires existant dans les dispositifs de reconnaissance de la parole.

Selon une première approche, on pourra, au lieu d'utiliser le procédé d'analyse cepstrale précédemment décrit, utiliser d'autres types de transformées ou d'autres types d'analyses similaires de celles qui sont utilisées dans les dispositifs de reconnaissance de la parole pour comparer de façon séquentielle les spectres à court terme du signal vocal.

En particulier on pourra substituer à la transformée cepstrale précédemment décrite une transformée de Fourier, ou les types d'analyse encore connus sous les désignations de LPC (abréviation du terme anglosaxon "linear productive coding") ou encore le procédé d'analyse par canaux. Naturellement en fonction de ces choix, les spectres devront être comparés selon une mesure de distance adéquate dépendante de la transformée ou de l'analyse employée. Par exemple, si une mesure de distance enclidienne doit être utilisée dans l'analyse cepstrale précédemment décrite, on utilisera par contre une mesure de distance selon la méthode d'Itakura pour l'analyse LPC qui est décrite par exemple dans l'article ASSP 2367-72 (1975) ayant pour titre : "Itakura F. Minimum Prediction Residual Principale Applied to Speech Recognition".

Selon encore une deuxième approche on pourra, au lieu d'utiliser les méthodes de comparaison précédemment décrites, mettre en oeuvre la méthode analytique utilisée dans la technique de reconnaissance de la parole consistant à comparer des sons de parole décrits par des segments élémentaires tel que phonèmes ou diphonèmes. Dans ces derniers cas tous les phonèmes, les caractéristiques lexicales et les règles de syntaxe des sons "Doppler" des cibles connues seront mémorisés dans la mémoire dictionnaire 14, et des analyses phonétiques, lexicales, syntaxiques et phonétiques pourront être lancées par l'opérateur de comparaison 17 pour comparer les résultats d'analyse aux données correspondantes du dictionnaire afin d'identifier le son inconnu à partir des caractéristiques des sons connus rangées dans la mémoire dictionnaire.

Egalement les moyens de détection de la vitesse radiale de la cible précédemment décrits pourront être avantageusement remplacés par les moyens qui sont habituellement utilisés pour la mesure du "Pitch" dans les techniques d'analyse vocale, en particulier tous les algorithmes existants pour effectuer cette mesure pourront être utilisés et notamment l'algorithme AMDF qui est l'abréviation de Average Magneticle Difference Function) dont une description peut être trouvée dans l'article intitulé "Average Magnitude Difference Function Pitch Detection" IEEE Trans. Acoust. Speech Signal Processing, Vol. ASSP 22, n°5, 1974.

Mais on pourra également utiliser directement les moyens d'analyse spectraux du radar pour donner directement la vitesse radiale de défilement de la cible.

## Revendications

1. Dispositif pour la reconnaissance automatique de cibles en mouvement à des vitesses différentes à partir de signaux "Doppler" fournis par des installations radar ou sonar, comprenant un convertisseur analogique numérique (10) pour convertir le signal Doppler en signaux numériques, et caractérisé en ce qu'il comprend :

   - des moyens d'analyse spectrale (11) pour calculer, pour chaque cible dans des intervalles de temps constant un nombre prédéterminé de spectres, chaque spectre étant représenté par un nombre prédéterminé de coefficients spectraux représentatifs de la transformation de Fourier inverse du logarithme de chaque spectre du signal représenté par les successions d'échantillons fournis par le convertisseur analogique numérique :
   - des moyens de normalisation (12) des coefficients spectraux fournis par les moyens d'analyse spectrale,
   - des moyens de mémorisation (14) des coefficients spectraux normalisés pendant une phase d'apprentissage lorsqu'ils correspondent à des cibles connues.
   - un opérateur de comparaison (15) pour comparer après la phase d'apprentissage les coefficients fournis par les moyens de normalisation avec les coefficients de chaque cible connue mémorisés dans les moyens de mémorisation (14) et un moyen de décision pour identifier la cible lorsque les coefficients spectraux obtenus correspondent à ceux d'une cible mémorisée dans les moyens de mémorisation et lorsque la vitesse de la cible mesurée par l'installation sonar ou radar correspond à la nature de la cible identifiée par les coefficients spectraux des moyens de mémorisation (14).

2. Dispositif selon la revendication 1 caractérisé en ce qu'il comprend un détecteur de paramètres "Doppler" couplé aux moyens de décision pour valider la cible identifiée.

3. Dispositif selon la revendication 1 caractérisé en ce que les moyens de décision comprennent des moyens pour réinitialiser la comparaison des coefficients spectraux lorsque les paramètres "Doppler" obtenus ne correspondent pas à la cible identifiée.

4. Dispositif selon la revendication 1 caractérisé l'opérateur de comparaison effectue la comparaison de façon linéaire.

5. Dispositif selon la revendication 1 caractérisé l'opérateur de comparaison effectue la comparaison par une méthode de programmation dynamique.

6. Dispositif selon la revendication 2 caractérisé en ce qu'il comprend des moyens pour détecter la fréquence "Doppler" du signal retransmis par la cible et pour contrôler la cohérence entre la nature de la cible obtenue par comparaison du spectre et de la vitesse indiquée par la fréquence "Doppler".

## Claims

1. A device for the automatic recognition of targets moving at different speeds, the device being based on Doppler signals supplied by radar or sonar installations and comprising an analog-to-digital converter (10) intended to convert the Doppler signal into digital signals, characterized in that it comprises:
   - spectrum analysis means (11) intended to calculate for each target with in constant time intervals a predetermined number of spectra, each spectrum being represented by a predetermined number of spectrum coefficients significative of the inverse Fourier transformation of the logarithm of each spectrum of the signal represented by the successive samples supplied by the analog-to-digital converter,
   - means (12) for standardizing the spectrum coefficients supplied by the spectrum analysis means,
   - storage means (14) for storing the standardized spectrum coefficients during a learning phase in which they correspond to known targets,
   - a comparison operator (15) intended for comparing after the learning phase the coefficients supplied by the standardizing means with the coefficients of each known target stored in the storage means (14), and a decision means intended to identify the target if the obtained spectrum coefficients correspond to a target stored in the storage means and if the speed of the target measured by means of the sonar or radar installation corresponds to the type of the target identified by the spectrum coefficients of the storage means (14).

2. A device according to claim 1, characterized in that it comprises a Doppler parameter detector coupled to the decision means in order to validate the identified target.

3. A device according to claim 1, characterized in that the decision means comprise means for reiterating the comparison of the spectrum coefficients, if the obtained Doppler parameters do not correspond to the identified target.

4. A device according to claim 1, characterized in that the comparison operator performs the comparison in a linear way.

5. A device according to claim 1, characterized in that the comparison operator performs the comparison by means of a dynamic programming method.

6. A device according to claim 2, characterized in that it comprises means for detecting the Doppler frequency of the signal retransmitted by the target and for controlling the coherence between the type of the target obtained by comparing the spectrum and the speed defined by the Doppler frequency.

## Patentansprüche

1. Vorrichtung zur automatischen Erkennung von sich mit verschiedenen Geschwindigkeiten bewegenden Zielen auf der Basis von Dopplersignalen, die von Radareinrichtungen oder Sonareinrichtungen geliefert werden, mit einem Analog-Digital-Wandler (10) zur Umwandlung des Dopplersignals in digitale Signale, dadurch gekennzeichnet, daß die Vorrichtung aufweist:

- Spektralanalysemittel (11), um für jedes Ziel in konstanten Zeitintervallen eine vorgegebene Anzahl von Spektren zu berechnen, wobei jedes Spektrum von einer vorgegebenen Anzahl von Spektralkoeffizienten dargestellt wird, die für die inverse Fouriertransformation des Logarithmus jedes Spektrums des Signals repräsentativ sind, das von den Aufeinanderfolgen von vom Analog-Digital-Wandler gelieferten Tastproben gebildet wird,
- Mittel zur Normalisierung (12) der von den Spektralanalysemitteln gelieferten Spektralkoeffizienten,
- Mittel (14) zur Speicherung der normalisierten Spektralkoeffizienten während einer Lernphase, in der diese Koeffizienten bekannten Zielen entsprechen,
- einen Vergleichsoperator (15), um nach der Lernphase die von den Normalisierungsmitteln gelieferten Koeffizienten mit den Koeffizienten jedes in den Speichermitteln (14) gespeicherten bekannten Ziels zu vergleichen, und ein Entscheidungsmittel, um das Ziel zu identifizieren, wenn die erhaltenen Spektralkoeffizienten denen eines in den Speichermitteln gespeicherten Ziels entsprechen und wenn die Geschwindigkeit des Ziels, die von der Sonar- oder Rardareinrichtung gemessen wird, der Art des durch die Spektralkoeffizienten der Speichermittel (14) identifizierten Ziels entspricht.

2. Vorrichtung nach Anspruch 1, dadurch gekennzeichnet, daß sie einen Detektor zur Erfassung von Dopplerparametern aufweist, der an die Entscheidungsmittel gekoppelt ist, um das identifizierte Ziel zu bestätigen.

3. Vorrichtung nach Anspruch 1, dadurch gekennzeichnet, daß die Entscheidungsmittel Mittel aufweisen, mit denen der Vergleich der Spektralkoeffizienten wiederholt wird, wenn die erhaltenen Dopplerparameter dem identifizierten Ziel nicht entsprechen.

4. Vorrichtung nach Anspruch 1, dadurch gekennzeichnet, daß der Vergleichsoperator einen linearen Vergleich durchführt.

5. Vorrichtung nach Anspruch 1, dadurch gekennzeichnet, daß der Vergleichsoperator den Vergleich aufgrund einer dynamischen Programmiermethode durchführt.

6. Vorrichtung nach Anspruch 2, dadurch gekennzeichnet, daß sie Mittel zur Erfassung der Dopplerfrequenz des vom Ziel ausgehenden Signals und zur Kontrolle der Kohärenz zwischen der Art des Ziels aufweist, die durch Vergleich des Spektrums und der durch die Dopplerfrequenz angegebenen Geschwindigkeit erhalten wird.

# FIG_1

# FIG_2

# FIG_3

# FIG_4